# EUROPÄISCHE PATENTANMELDUNG

(11) **EP 1 967 491 A2**
(43) Veröffentlichungstag der Anmeldung: **10.09.2008**
(21) Anmeldenummer: 08003411.9
(22) Anmeldetag: 25.02.2008
(51) Int. Cl.: C01B 3/56, C01B 3/58

(54) **Verfahren und Vorrichtung zur Wasserstoffabtrennung aus Gasströmen mit Sauerstoffanteil**

(30) Priorität: 06.03.2007 DE 102007010875
(71) Anmelder: Linde Aktiengesellschaft, 80807 München (DE)
(72) Erfinder: Leitgeb, Paul, Dr., 82049 Pullach (DE); Wenning, Ulrike, Dr., 82049 Pullach (DE); Leitmayr, Werner, 86633 Neuburg/Donau (DE); Keller, Tobias, 83620 Feldkirchen-Westerham (DE)

(57) **Zusammenfassung**

Die Erfindung beschreibt ein Verfahren und eine Vorrichtung zur Abtrennung von Wasserstoff aus einem Gasstrom mit Sauerstoffanteil, überwiegend bestehend aus Wasserstoff, Stickstoff, Sauerstoff, Kohlendioxid, Kohlenmonoxid, Methan und/oder anderen Kohlenwasserstoffen. Der Gasstrom (1) wird in einem mehrstufigen Verdichtungsverfahren (2) verdichtet und anschließend mittels Wärmetauscher (3) auf Raumtemperatur abgekühlt. Nach einem Voradsorber (4) wird der Gasstrom in ein katalytisches Verfahren zur Sauerstoffentfernung (K) geführt. Die katalytische Reaktion zur Sauerstoffentfernung verläuft exotherm. Anschließend wird der Gasstrom über einen weiteren Wärmetauscher (W) auf Raumtemperatur abgekühlt und in ein Druckwechseladsorptionsverfahren (5) zur Wasserstoffabtrennung geführt. Dort wird Wasserstoff (6) vom Restgas (7) getrennt.

## Beschreibung

Die Erfindung betrifft ein Verfahren zur Abtrennung von Wasserstoff aus einem Gasstrom mit Sauerstoffanteil, überwiegend bestehend aus Wasserstoff, Stickstoff, Sauerstoff, Kohlendioxid, Kohlenmonoxid, Methan und/oder anderen Kohlenwasserstoffen, sowie eine Vorrichtung zur Durchführung des Verfahrens.

Die Erfindung wird am Beispiel der Abtrennung von Wasserstoff aus Koksofengas beschrieben, ist aber zur Abtrennung von Wasserstoff aus einem beliebigen Gasstrom einer beliebigen Zusammensetzung der oben genannten Komponenten geeignet und daher nicht auf Koksofengas eingeschränkt.

Bei der Herstellung von Koks in Kokereien wird zumeist Steinkohle unter Luftabschluss erhitzt. Dabei entstehen Koks, Koksgas und Teer. Der kohlenstoffreichere Koks wird hauptsächlich zur Eisenerzeugung genutzt. Das überwiegend aus Wasserstoff, Methan und Kohlenmonoxid bestehende Koksgas wird nach dem Stand der Technik hauptsächlich als Industriebrennstoff eingesetzt. Koksofengas besitzt jedoch nur rund die Hälfte des Heizwertes von Erdgas und ist häufig durch Begleitstoffe verunreinigt, die Schadstoffemissionen oder Betriebsstörungen verursachen können. Daher ist man im Zuge strengerer Umweltrichtlinien bemüht, alternative Verwendungen für Koksofengas zu finden.

Oft besteht Koksgas zu ca. 60% aus Wasserstoff. Wasserstoff wird unter anderem in großen Mengen in Erdölraffinerien zur Reduktion des Schwefelgehaltes von Mitteldestillaten in sogenannten Hydrotreatern und zur Spaltung verschiedener Erdölfraktionen in so genannten Hydrocrackern benötigt. Zusätzlich findet Wasserstoff bei der Reduzierung von Metalloxiden, der Ammoniakherstellung, als Treibstoff oder in Brennstoffzellen Verwendung. Ein Verfahren nach dem Stand der Technik zur Abtrennung von Wasserstoff aus einem Gasstrom, der neben Wasserstoff überwiegend Stickstoff, Kohlendioxid, Kohlenmonoxid und Methan neben Verunreinigungen von Sauerstoff und Argon enthält, wird in EP 1033346 beschrieben.

Bei einem Verfahren zur Druckwechseladsorption nach dem Stand der Technik wird das Gasgemisch unter hohen Druck in einem Reaktor mit einem Adsorber geführt. Abhängig vom herrschenden Druck und dem Adsorbermaterial adsorbieren die Komponenten des Gasgemisches unterschiedlich stark auf dem Adsorbermaterial. Im Idealfall adsorbieren alle Komponenten des Gasgemisches auf den Adsorber mit Ausnahme von Wasserstoff. Wasserstoff wird so mit hoher Reinheit von den restlichen Komponenten abgetrennt. Die Regeneration des Adsorbers erfolgt bei niedrigem Druck durch Desorption der gebundenen Komponenten, die dann ebenfalls gasförmig aus dem Reaktor abgezogen werden können. Mit einem Druckwechseladsorptionsverfahren kann somit unter Verwendung von mehreren Reaktoren, die jeweils wechselseitig adsorbieren, bzw. desorbieren, Wasserstoff mit einer hohen Reinheit von den restlichen gasförmigen Komponenten abgetrennt werden. Mithilfe des in EP 1033346 beschriebenen Verfahrens lässt sich Wasserstoff mit einer Reinheit von maximal 99,99 % von den restlichen gasförmigen Komponenten abtrennen.

Bei der Verwendung eines derartigen Verfahrens nach dem Stand der Technik entsteht bei Sauerstoffanteilen im Gasstrom von über 1 Vol.-% ein erhöhtes Sicherheitsrisiko. Der im Gasgemisch vorhandene Sauerstoff wird zunächst bei hohem Druck im Adsorber adsorbiert, im weiteren Verlauf aber durch stärker adsorbierende Komponenten wieder in die Gasphase verdrängt. Dies führt zu einer Sauerstoffanreicherung im Adsorber, so dass in Kombination mit dem im Gas vorhandenen Wasserstoff ein zündfähiges, explosives Gemisch entsteht. Dieses explosive Gemisch stellt in einem Druckwechseladsorptionsverfahren nach dem Stand der Technik ein Sicherheitsrisiko dar.

Der vorliegenden Erfindung liegt daher die Aufgabe zugrunde, ein Verfahren der eingangs erwähnten Art derart auszugestalten, dass die Bildung eines explosiven Wasserstoff-Sauerstoff-Gasgemisches vermieden und das Sicherheitsrisiko eines derartigen Verfahrens minimiert wird.

Die vorliegende Aufgabe wird dadurch gelöst, dass ein katalytisches Verfahren zur Sauerstoffentfernung mit einem Druckwechseladsorptionsverfahren zur Abtrennung von Wasserstoff kombiniert wird, wobei das Druckwechseladsorptionsverfahren nach dem katalytischen Verfahren zur Sauerstoffentfernung durchgeführt wird.

Durch die Kombination eines katalytischen Verfahrens zur Sauerstoffentfernung mit einem Druckwechseladsorptionsverfahren wird der Sauerstoffgehalt im Gasgemisch schon vor dem Druckwechseiadsorptionsverfahren derart minimiert, dass kein explosives Gasgemisch aus Wasserstoff und Sauerstoff entstehen kann. Erste Untersuchungen zeigen, dass trotz des hohen Anteils an Katalysatorgiften der Sauerstoff sehr selektiv katalytisch umgesetzt werden kann. Überaschenderweise und entgegen dem bisherigen Stand der Technik wird durch die im Gasstrom vorhandenen Katalysatorgifte die Katalysatoraktivität nicht negativ beeinflusst. Bei der katalytischen Reaktion wird weder nennenswert Methan noch Ammoniak gebildet. Es hat sich außerdem gezeigt, dass bei Anwendung des erfindungsgemäßen Verfahrens eine katalytische Nachreinigung des abgetrennten Wasserstoffs in den meisten Fällen entfallen kann. Die Abreicherung des Sauerstoffs aus Sicherheitsgründen und die Abreicherung zum Erreichen der geforderten Produktreinheit finden so in einem Schritt statt.

Vorteilhafterweise werden durch die Anwendung des erfindungsgemäßen Verfahrens auch Gasströme mit einem Sauerstoffanteil von mehr als 1 Vol-% sicher von dem Druckwechseladsorptionsverfahren verarbeitet.

Bevorzugt werden als Katalysatoren herkömmliche Hydrier- und Oxidationskatalysatoren eingesetzt. Vorteilhafterweise werden als Katalysatormaterial Edelmetalle, insbesondere Platin und/oder Palladium, auf einem festen Trägermaterial, insbesondere Aluminiumoxid und/oder Keramik in Kugel- oder Wabenform, eingesetzt. Die Einzeln oder in Kombination auf verschiedenen Trägermaterialien verwendeten Edelmetalle haben den Vorteil, dass sie kommerziell erhältlich sind und eine wirtschaftlich sinnvolle Standzeit aufweisen. Ebenso wird mit den verwendeten Katalysatormaterialien eine sehr selektive katalytische Umsetzung des Sauerstoffs erreicht.

Vorteilhafterweise wird der Gasstrom nach dem katalytischen Verfahren zur Sauerstoffentfernung über ein Verdichtungsverfahren, mindestens einen Wärmetauscher und/oder einen Voradsorber in das Druckwechseladsorptionsverfahren geführt. Nach dem Stand der Technik wird der Gasstrom in einem Verdichtungsverfahren verdichtet, abgekühlt und über einen Voradsorber zur Entfernung von höhermolekularen Kohlenwasserstoffen als Einsatzstoff in ein Druckwechseladsorptionsverfahren zur Abtrennung des Wasserstoffs geführt. Für die erfindungsgemäße Positionierung des katalytischen Verfahrens zur Sauerstoffentfernung vor dem Druckwechseladsorptionsverfahrens ergeben sich je nach Ausgestaltung der Erfindung mehrere Möglichkeiten.

In einer Ausgestaltung der Erfindung wird das katalytische Verfahren zur Sauerstoffentfernung mit einem nachgeschalteten Wärmetauscher vor dem Verdichtungsverfahren positioniert. In dieser Ausgestaltung der Erfindung kann das katalytische Verfahren bei einem relativ geringen Druck des Gasstroms (ca. 2bar) und bei allerdings auch relativ geringen Temperaturen (ungefähr Raumtemperatur) durchgeführt werden. Hierbei wirkt sich vor allem der relativ geringe Druck günstig auf die Lebensdauer des Katalysators aus.

In einer anderen Ausgestaltung der Erfindung wird das katalytische Verfahren zur Sauerstoffentfernung nach dem Verdichtungsverfahren durchgeführt. In dieser Ausgestaltung der Erfindung wird die katalytische Sauerstoffentfernung zwar bei relativ hohem Gasdruck (ca. 8 bar) aber auch bei hoher Temperatur (ca. 400°C) durchgeführt. Besonders die hohe Temperatur wirkt sich positiv auf die Lebensdauer des Katalysators aus. Speziell ein Katalysator aus Platin auf Keramikwaben kann schon bei Temperaturen von 400°C regeneriert werden, das heißt die mutmaßlichen Katalysatorgifte wie beispielsweise Kohlenmonoxid werden bei voller Aktivität des Katalysators entfernt. Außerdem wird in dieser Ausgestaltung der Erfindung ein Wärmetauscher eingespart.

In einer weiteren Ausgestaltung der Erfindung wird das katalytische Verfahren zur Sauerstoffentfernung mit einem nachgeschalteten Wärmetauscher nach einem Voradsorber direkt vor dem Druckwechseladsorptionsverfahren positioniert. Durch den Voradsorber werden höhermolekulare Kohlenwasserstoffe entfernt, die sich auf dem Katalysatormaterial oder auf den Adsorbern des Druckwechseladsorptionsverfahrens ablagern könnten. Bei vorhandenem hohen Druck des Einsatzgases kann das katalytische Verfahren zur Sauerstoffentfernung direkt vor oder nach dem Voradsorber installiert werden. Insbesondere bei hohem Druck und fehlenden höhermolekularen Kohlenwasserstoffen im Einsatzgas wird das katalytische Verfahren zur Sauerstoffentfernung direkt vor dem Druckwechseladsorptionsverfahren durchgeführt.

Zur Erreichung eines sehr hohen Reinheitsgrades des abgetrennten Wasserstoffes wird in einer anderen Ausgestaltung der Erfindung der abgetrennte Wasserstoff einem weiteren Verfahren zur katalytischen Entfernung von Restsauerstoffspuren unterzogen. Durch die Verwendung eines nachgeschalteten katalytischen Verfahrens zur Abtrennung von Sauerstoff kann die Produktreinheit weiter erhöht werden.

Generell sind je nach Sauerstoffgehalt im Gasgemisch und zu erzielender Reinheit des Wasserstoffs verschiedene Kombinationen der beschriebenen Ausgestaltungen der Erfindung möglich. Bei einem Sauerstoffgehalt von unter 1 Vol.% im Gasgemisch wird der Sauerstoffgehalt durch das katalytische Verfahren zur Sauerstoffentfernung auf weniger als 200 ppm reduziert. Bei einem Sauerstoffgehalt von über 1 Vol.-% kann die katalytische Entfernung von Sauerstoff aus Gasgemisch entweder bis zu einem Sauerstoffgehalt erfolgen, bei dem kein Sicherheitsrisiko für das Druckwechseladsorptionsverfahren besteht (1 Vol-%), oder ebenfalls auf einen deutlich geringeren Wert wie beispielsweise 200 ppm. Je nach gewünschter Produktreinheit beziehungsweise im katalytischen Verfahren eingestelltem Sauerstoffgehalt kann dann ein optionales katalytisches Verfahren zur Sauerstoffentfernung nach dem Druckwechseladsorptionsverfahren angewandt werden.

Vorrichtungsseitig wird die gestellte Aufgabe dahingehend gelöst, dass ein, mit einem festem Katalysator befüllter, Reaktor stromaufwärts vor einer Vorrichtung zur Durchführung eines Druckwechseladsorptionsverfahrens positioniert ist.

Vorteilhafterweise besteht der Katalysator aus einem herkömmlichen Hydrier- oder Oxidationskatalysator. Bevorzugt besteht der Katalysator aus Edelmetallen, insbesondere Platin und/oder Palladium, auf einem festen Trägermaterial, insbesondere Aluminiumoxid und/oder Keramik in Kugel- oder Wabenform.

Mit der vorliegenden Erfindung gelingt es insbesondere, die Entstehung eines explosiven Gasgemisches aus Wasserstoff und Sauerstoff in einem Druckwechseladsorptionsverfahren zu vermeiden und somit das Sicherheitsrisiko zu minimieren.

Im Folgenden soll die Erfindung anhand eines Vergleiches eines Ausführungsbeispieles der Erfindung mit dem Stand der Technik näher erläutert werden.

Es zeigen
- Figur 1:: ein Verfahren zur Wasserstoffabtrennung mittels eines Druckwechseladsorptionsverfahrens nach dem Stand der Technik
- Figur 2:: ein Ausführungsbeispiel der Erfindung

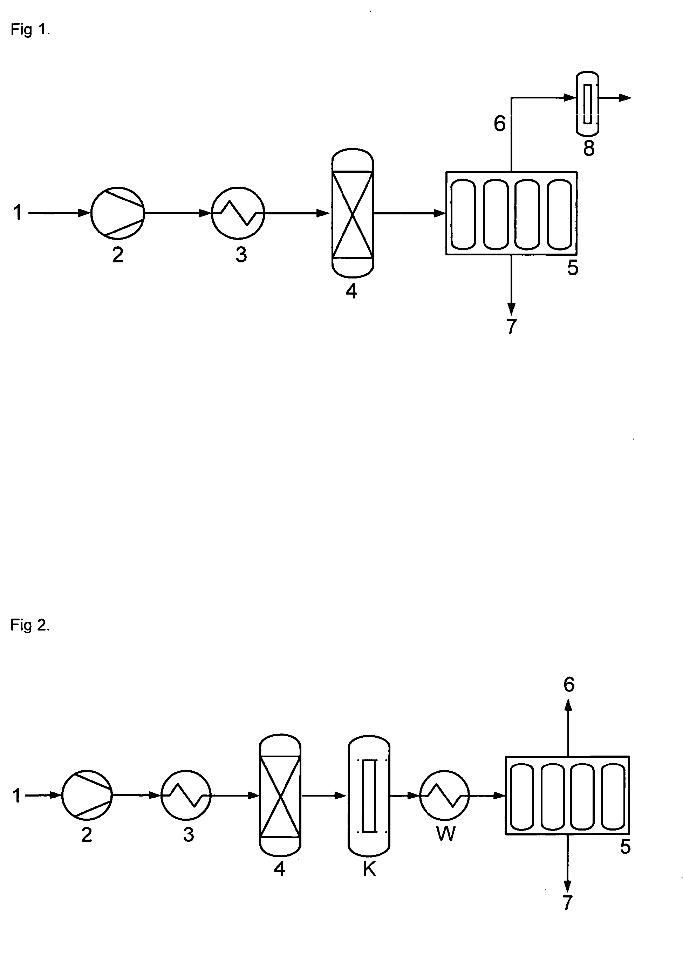

Im Einzelnen zeigt Figur 1 ein Verfahren zur Wasserstoffabtrennung aus einem Gasstrom mit Sauerstoffanteil nach dem Stand der Technik. Der Gasstrom (1) wird in einem Verdichtungsverfahren (2) verdichtet und anschließend mittels Wärmetauscher (3) auf Raumtemperatur abgekühlt. Über einen Voradsorber (4) zur Abtrennung von höhermolekularen Kohlenwasserstoffen wird der Gasstrom in ein Druckwechseladsorptionsverfahren (5) zur Wasserstoffabtrennung (6) vom Restgas (7) geführt. In dem Verfahren nach dem Stand der Technik kann nur ein Gasstrom (1) mit einem Sauerstoffanteil von weniger als 1 Vol-% ohne Sicherheitsrisiko verarbeitet werden. Zum Erreichen einer verwertbaren Produktreinheit des Wasserstoffes (6) ist dem Druckwechseladsorptionsverfahren ein katalytisches Verfahren zur Entfernung von Restsauerstoffspuren (8) nachgeschaltet.

Figur 2 zeigt eine Ausgestaltung der Erfindung. Der Gasstrom (1) wird in einem Verdichtungsverfahren (2) verdichtet und anschließend mittels Wärmetauscher (3) auf Raumtemperatur abgekühlt. Nach einem Voradsorber (4) wird der Gasstrom in ein katalytisches Verfahren zur Sauerstoffentfernung (K) geführt. Die katalytische Reaktion zur Sauerstoffentfernung verläuft exotherm. Anschließend wird der Gasstrom über einen weiteren Wärmetauscher (W) auf Raumtemperatur abgekühlt und in ein Druckwechseladsorptionsverfahren (5) zur Wasserstoffabtrennung geführt. Dort wird Wasserstoff (6) vom Restgas (7) getrennt. Im Gegensatz zum Stand der Technik kann auch ein Gasstrom mit einem Sauerstoffanteil von über 1 Vol-% sicher verarbeitet werden. Durch das katalytische Verfahren zur Sauerstoffentfernung (K) wird der Sauerstoffanteil in dieser Ausgestaltung der Erfindung vor dem Druckwechseladsorptionsverfahren auf weniger als 200 ppm gesenkt, so dass auf die nachgeschaltete katalytische Entfernung von Restsauerstoffspuren verzichtet werden. Der abgetrennte Wasserstoff (6) besitzt eine verwertbare Produktreinheit.

## Patentansprüche

1. Verfahren zur Abtrennung von Wasserstoff aus einem Gasstrom mit Sauerstoffanteil, überwiegend bestehend aus Wasserstoff, Stickstoff, Sauer stoff, Kohlendioxid, Kohlenmonoxid, Methan und/oder anderen Kohlenwasserstoffen, **dadurch gekennzeichnet, dass** ein katalytisches Verfahren zur Sauerstoffentfernung mit einem Druckwechseladsorptionsverfahren zur Abtrennung von Wasserstoff kombiniert wird, wobei das Druckwechseladsorptionsverfahren nach dem katalytischen Verfahren zur Sauerstoffentfernung durchgeführt wird.

2. Verfahren nach Anspruch 1, **dadurch gekennzeichnet, dass** auch Gasströme mit einem Sauerstoffanteil von mehr als 1 Vol% sicher von dem Druckwechseladsorptionsverfahren verarbeitet werden.

3. Verfahren nach Anspruch 1 oder 2, **dadurch gekennzeichnet, dass** als Katalysatoren herkömmliche Hydrier- und Oxidationskatalysatoren eingesetzt werden.

4. Verfahren nach einem der Ansprüche 1 bis 3, **dadurch gekennzeichnet, dass** als Katalysatoren bevorzugt Edelmetalle, insbesondere Platin und/oder Palladium, auf einem festen Trägermaterial, insbesondere Aluminiumoxid und/oder Keramik in Kugel- oder Wabenform, eingesetzt werden.

5. Verfahren nach einem der Ansprüche 1 bis 4, **dadurch gekennzeichnet, dass** der Gasstrom nach dem katalytischen Verfahren zur Sauerstoffentfernung über ein Verdichtungsverfahren, mindestens einen Wärmetauscher und/oder einen Voradsorber in das Druckwechseladsorptionsverfahren geführt wird.

6. Verfahren nach einem der Ansprüche 1 bis 5, **dadurch gekennzeichnet, dass** der Wasserstoff nach dem Verfahren zur Abtrennung von Wasserstoff einem weiteren katalytischen Verfahren zur Sauerstoffentfernung unterzogen wird.

7. Vorrichtung zur Abtrennung von Wasserstoff aus einem Gasstrom mit Sauerstoffanteil, überwiegend bestehend aus Wasserstoff, Stickstoff, Sauerstoff, Kohlendioxid, Kohlenmonoxid, Methan und/oder anderen Kohlenwasserstoffen, **dadurch gekennzeichnet, dass** ein, mit einem festen Katalysator befüllter, Reaktor stromaufwärts vor einer Vorrichtung zur Durchführung eines Druckwechseladsorptionsverfahrens positioniert ist.

8. Vorrichtung nach Anspruch 7, **dadurch gekennzeichnet, dass** der Katalysator aus einem herkömmlichen Hydrier- oder Oxidationskatalysator besteht.

9. Vorrichtung nach Anspruch 7 oder 8, **dadurch gekennzeichnet, dass** der Katalysator aus Edelmetallen, insbesondere Platin und/oder Palladium, auf einem festen Trägermaterial, insbesondere Aluminiumoxid und/oder Keramik in Kugel- oder Wabenform, besteht.
